(19) Europäisches Patentamt
European Patent Office
Office européen des brevets

(11) **EP 2 187 354 B1**

(12) **EUROPÄISCHE PATENTSCHRIFT**

(45) Veröffentlichungstag und Bekanntmachung des Hinweises auf die Patenterteilung:
**21.03.2012 Patentblatt 2012/12**

(51) Int Cl.:
***G06T 11/20*** *(2006.01)*

(21) Anmeldenummer: **09013784.5**

(22) Anmeldetag: **03.11.2009**

(54) **Verfahren zur Darstellung von Linienzügen**

Method for representing graphical symbols

Procédé de représentation de lignes continues

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **15.11.2008 DE 102008057512**

(43) Veröffentlichungstag der Anmeldung:
**19.05.2010 Patentblatt 2010/20**

(73) Patentinhaber: **Diehl Aerospace GmbH**
**88662 Überlingen (DE)**

(72) Erfinder:
• **Bader, Joachim**
**35510 Butzbach (Griedel) (DE)**
• **Hoppe, Sven Marco**
**61440 Oberursel (DE)**

(74) Vertreter: **Diehl Patentabteilung**
**c/o Diehl Stiftung & Co. KG**
**Stephanstrasse 49**
**90478 Nürnberg (DE)**

(56) Entgegenhaltungen:
| | |
|---|---|
| **EP-A- 2 107 528** | **WO-A-84/02993** |
| **US-A1- 2004 263 516** | **US-A1- 2006 022 977** |
| **US-A1- 2007 229 454** | **US-B1- 6 707 452** |

• **ANONYMOUS: "Line Joins"[Online] 25. Februar 2008 (2008-02-25), Seiten 1-2, XP002567858 Gefunden im Internet: URL:http://web.archive.org/web/20080225143702/www.opengl.org/resources/code/samples/sig99/advanced99/notes/node281.html> [gefunden am 2010-02-10]**
• **G. E. GARDNER: "Rendering Two-Dimensional Primitives using OpenGL" CSCENE MAGAZINE, [Online] 30. Mai 2003 (2003-05-30), Seiten 1-12, XP002567859 Gefunden im Internet: URL:http://web.archive.org/web/20030530073610/http://www.codersger.de/mags/cscene/CS 6/CS6-06.html> [gefunden am 2010-02-10]**
• **HAEBERLI P ET AL: "Texture Mapping as a Fundamental Drawing Primitive" PROCEEDINGS OF THE EUROGRAPHICS WORKSHOP ON RENDERING, XX, XX, 1. Juni 1993 (1993-06-01), Seiten 259-266, XP002241994**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Darstellung von Linienzügen auf einem rasterbasierenden Anzeigegerät, wobei ein Linienzug durch eine Folge von zweidimensionalen Stützpunkten und eine Linienbreite definiert wird und wobei zwischen zwei Stützpunkten jeweils ein die Stützpunkte verbindendes Rechteck mit einer durch den Abstand der Stützpunkte vorgegebenen Rechtecklänge und einer durch die Linienbreite vorgegebenen Rechteckbreite dargestellt wird.

Rasterbasierende Anzeigegeräte werden beispielsweise in Fahrzeugen oder Flugzeugen eingesetzt und dienen der Anzeige von Informationen, die für den Betrieb, beziehungsweise die Steuerung des Fahrzeugs oder des Flugzeugs wichtig sind. Auf den verwendeten Anzeigegeräten, üblicherweise Bildschirme oder flache Displays, sollen die jeweils angezeigten Informationen möglichst übersichtlich sowie schnell und eindeutig erkennbar dargestellt werden. Gleichzeitig sollen unerwünschte Veränderungen während der Anzeige der Informationen wie beispielsweise sich lageabhängig verändernde Linienstärken oder unsauber interpolierte Linienzüge vermieden werden, da sie die Aufmerksamkeit der Betrachter nachteilig beeinträchtigen könnten.

Um insbesondere in Flugzeugen grafische Darstellungen erzeugen und anzeigen zu können, die auf Grund der sicherheitsrelevanten Vorgaben hohen Qualitätsanforderungen entsprechen sollen, wurden daran angepasste Programmiersprachen und Hardwarekomponenten entwickelt, die sich durch eine einfache, jedoch zuverlässige und möglichst natürlich wirkende Wiedergabe von optisch angezeigten Informationen auszeichnen. Während die Software wie beispielsweise die "Standard Graphics Language" (SGL) kontinuierlich weiterentwickelt wurde, ist die Entwicklung neuer Hardwarekomponenten insbesondere für die zivile und militärische Luftfahrt außerordentlich kostenintensiv.

Um die Entwicklung immer leistungsfähigerer Hardwarekomponenten, die für die Anzeige derartiger Informationen optimiert sind, vermeiden zu können werden Verfahren zur Darstellung von grafischen Informationen entwickelt, beziehungsweise optimiert, die keine daran angepassten Hardwarekomponenten erfordern und beispielsweise auch in Verbindung mit handelsüblichen Grafikkarten, Grafikprozessoren oder grafischen Anzeigegeräten verwendet werden können und gleichwohl eine hohe grafische Anzeigequalität ermöglichen und gewährleisten.

Es ist aus der Praxis bekannt, dass ein Linienzug, der durch eine Folge von zweidimensionalen Stützpunkten und durch eine vorgegebene Linienbreite definiert ist, durch eine Folge von Rechtecken dargestellt werden kann, welche jeweils benachbarte Stützpunkte miteinander verbinden und in ihrer Breite der vorgegebenen Linienbreite entsprechen. Wird die standardisierte Grafikprogrammiersprache OpenGL verwendet, so werden die Rechtecke jeweils vorzugsweise als zwei Dreiecke mit einer gemeinsamen Basislinie dargestellt, da bei dieser Grafikprogrammiersprache Dreiecke, beziehungsweise Dreiecksfolgen besonders schnell erzeugt und zur Anzeige gebracht werden können.

Problematisch bei solchen Rechteckfolgen ist jedoch der Bereich zwischen zwei aufeinanderfolgenden Rechtecken, falls die Ausrichtung der beiden aufeinanderfolgenden Rechtecke relativ zueinander merklich abweicht und einen Winkel $\alpha$ aufweist. In diesem Fall überlappen sich die beiden aufeinanderfolgenden Rechtecke teilweise, während auf einer dem Überlappungsbereich gegenüberliegenden Seite ein sichtbarer Spalt verbleibt, der von keinem der beiden aufeinanderfolgenden Rechtecke abgedeckt wird.

Ein aus mehreren Rechtecken zusammengesetzter Linienzug wird dann nicht mehr als einheitlicher Linienzug in natürlicher Darstellung wahrgenommen, sondern als zerbrochener Linienzug, beziehungsweise als Folge von einzelnen Liniensegmenten, die nicht kontinuierlich verbunden erscheinen.

Beispielsweise aus US 2007/0 222 784 A1 und WO 84/02993 ist es bekannt, dass die sich ergebenden Spalten zwischen den Rechtecken durch Kreissegmente abgedeckt, beziehungsweise ausgefüllt werden können, um dem Linienzug ein natürlicheres Aussehen zu verleihen. Dabei wird für sämtliche Bildpunkte, die in den Bereich des Kreissegments fallen könnten, eine Überprüfung durchgeführt, ob und gegebenenfalls mit welcher Intensität die betreffenden Bildpunkte angezeigt werden sollen. Ein derartiges Verfahren ist sehr rechenintensiv und insbesondere für die Darstellung von zahlreichen Linienzügen mit einer mehrere Bildpunkte umfassenden Linienbreite nicht geeignet.

Als Aufgabe der vorliegenden Erfindung wird es demzufolge angesehen, ein Verfahren der eingangs genannten Gattung zur Darstellung von Linienzügen zu entwickeln, welches mit einem möglichst geringen Rechen- und Zeitaufwand eine qualitativ hochwertige Darstellung von Linienzügen mit einer endlichen Linienbreite ermöglicht.

Diese Aufgabe wird erfindungsgemäß dadurch gelöst, dass zwischen zwei aufeinanderfolgenden Rechtecken, deren Ausrichtung zueinander einen Winkel $\alpha \geq \alpha_0$ aufweist, eine einen Spalt zwischen den Rechtecken abdeckende Dreiecksfolge dargestellt wird. Eine Dreiecksfolge kann insbesondere bei Verwendung der Grafikprogrammiersprache OpenGL sehr schnell dargestellt werden. Es müssen lediglich die jeweiligen Eckpunkte ermittelt werden, welche die Dreiecksfolge begrenzen. Die Zuordnung und Überprüfung einzelner Bildpunkte innerhalb möglicherweise relevanter Bereiche zwischen aufeinanderfolgenden Rechtecken ist nicht notwendig.

Vorzugsweise ist vorgesehen, dass die Dreiecksfolge aus mehreren Dreiecken besteht, die jeweils den die aufeinanderfolgenden Rechtecke verbindenden Stützpunkt als gemeinsamen Eckpunkt aufweisen. Da sich die beiden aufeinanderfolgenden Rechtecke in dem verbindenden Stützpunkt berühren, überlappen sich die beiden aufeinanderfolgenden Rechtecke in einem ersten Bereich neben dem Stützpunkt, während sich in einem gegenüberliegenden zweiten Bereich auf einer anderen Seite des Stützpunkts ein Spalt zwischen den aufeinanderfolgenden Rechtecken öffnet. Je größer die jeweilige Ausrichtung der Rechtecke voneinander abweicht, umso größer ist der Spalt zwischen diesen Rechtecken. Es hat sich gezeigt, dass ein Ausfüllen des Spalts durch ein einziges Dreieck, dessen Eckpunkte neben dem die aufeinanderfolgenden Rechtecke verbindenden Stützpunkt auch die jeweils zugeordneten Eckpunkte der aufeinanderfolgenden Rechtecke aufweist, insbesondere bei größeren Abweichungen der jeweiligen Ausrichtung der Rechtecke zueinander nicht als optisch ansprechende Verbindung der Rechtecke wahrgenommen wird. Aus diesem Grund erscheint es zweckmäßig, dass die Dreiecksfolge aus mehreren Dreiecken besteht und die außenliegenden Dreieckskanten möglichst an ein Kreisbogensegment angenähert sind.

Es hat sich gezeigt, dass in vielen in der Praxis auftretenden Fällen es als ausreichend angesehen werden kann, wenn die Dreiecksfolge drei Dreiecke aufweist. Da die Linienbreite vieler Objekte lediglich weniger Bildpunkte des rasterbasierenden Anzeigegeräts überdeckt, kann lediglich eine entsprechend geringe Anzahl von Bildpunkten sich in dem Spalt zwischen den beiden aufeinanderfolgenden Rechtecken befinden. In den meisten Fällen wird dann durch eine Dreiecksfolge von drei Dreiecken dieser Spalt bereits näherungsweise wie durch ein Kreissegment aufgefüllt, so dass kein merklicher Unterschied mit dem menschlichen Auge wahrgenommen werden kann. Natürlich kann die Dreiecksfolge auch mehr als drei Dreiecke aufweisen, wodurch die optische Qualität der Anzeige in Einzelfällen verbessert werden kann.

Um den Linienzug möglichst schnell darstellen zu können ist vorgesehen, dass zwischen dem Rechteck und der Dreiecksfolge sowie zwischen der Dreiecksfolge und dem anschließenden Rechteck jeweils ein Anschlussdreieck dargestellt wird, dessen Eckpunkte die beiden der Dreiecksfolge zugewandten Eckpunkte des Rechtecks, beziehungsweise des anschließenden Rechtecks sowie der verbindende Stützpunkt sind. Insbesondere bei Verwendung der Grafikprogrammiersprache Open GL können Dreiecke, beziehungsweise besonders einfach und schnell dargestellt und zur Anzeige gebracht werden. Auch die aufeinanderfolgenden Rechtecke werden üblicherweise als eine Folge von zwei Dreiecken dargestellt. Da weder die Rechtecke noch die diese Rechtecke ausfüllenden Dreiecke einen mit dem verbindenden Stützpunkt zusammen verwendeten Eckpunkt aufweisen ist es vorteilhaft, für den jeweiligen Anschluss an die zwischen den Rechtecken angeordnete Dreiecksfolge ein Anschlussdreieck vorzusehen, dessen Basislänge mit einer der Dreiecksfolge zugewandten Endkante des Rechtsecks, beziehungsweise des anschließenden Rechtecks zusammenfällt und dessen verbleibender Eckpunkt der mittig auf dieser Basislänge liegende verbindende Stützpunkt ist. Auf diese Weise wird eine Halbierung der Kantenlänge während der Darstellung des Anschlussdreiecks vorgenommen, so dass daran anschließend unmittelbar die zum Verschließen des Spalts erforderliche Dreiecksfolge anschließen kann, um im Anschluss daran durch ein weiteren Anschlussdreieck die Kantenlänge wieder an die Linienbreite, beziehungsweise die Rechtecksbreite des anschließenden Rechtecks anzupassen und dieses Rechteck durch zwei weitere Dreiecke darstellen zu können.

Auf diese Weise kann ein vollständiger Linienzug einschließlich der die Spalte zwischen einzelnen aufeinanderfolgenden Liniensegmenten, beziehungsweise Rechtecken ausfüllenden Polygone durch eine kontinuierliche Dreiecksfolge erzeugt, beziehungsweise abgebildet werden. Eine derartige Dreiecksfolge lässt sich im Voraus einfach berechnen und sehr schnell zur Anzeige bringen.

Vorzugsweise ist vorgehen, dass die Eckpunkte der Dreiecksfolge in Abhängigkeit von dem Winkel $\alpha$ zwischen der Ausrichtung der aufeinanderfolgenden Rechtecke vorgegeben werden. Es hat sich gezeigt, dass bei vergleichsweise kleinen Winkeln $\alpha \leq 20°$ ein zwischen den aufeinanderfolgenden Rechtecken verbleibender Spalt kaum wahrgenommen wird. Dieser Spalt kann in einfacher Weise dadurch verhindert, beziehungsweise abgedeckt werden, dass anstelle der beiden benachbarten Rechtecke jeweils Polygone gezeichnet werden, deren gemeinsame Polygonkante längs der Winkel halbierenden der den Spalt begrenzenden Rechteckskanten liegt.

Des Weiteren können die Eckpunkte der Dreiecksfolge beispielsweise für besonders große Richtungsänderungen, beziehungsweise Winkel $\alpha \geq 160°$ in einfacher, genäherter Weise abweichend von dem verbleibenden Winkelbereich $20° \leq \alpha \leq 160°$ berechnet werden, um bei extrem spitzen Winkeln durch vereinfachende Näherungen einen unnötigen Berechnungsaufwand vermeiden zu können.

Um eine optisch ansprechende Darstellung des Linienzugs zu ermöglichen ist vorgesehen, dass die Dreiecksfolge mit einer Textur gefüllt wird. In den jeweiligen Übergangsbereichen zu den benachbarten Rechtecken soll die für die Dreiecksfolge verwendete Textur einen an die Textur der Rechtecke angepassten Übergangsbereich der Textur aufweisen.

Vorzugsweise ist vorgesehen, dass die Textur ein Teilbereich einer Endpunkttextur ist. Eine Endpunkttextur ist in den meisten Fällen eine halbkreisförmige, radialsymmetrische Textur, welche an die Linienbreite des Linienzugs und an dessen Textur angepasst ist. Durch die Verwendung eines geeigneten Teilbereichs einer Endpunkttextur kann ein nahtloser Übergang der Textur der Dreiecksfolge zu den benachbart anschließenden Texturen des Rechtecks sichergestellt werden.

In vorteilhafter Weise ist vorgesehen, dass die Textur ein Kreissegment aus einer radialsymmetrischen Endpunkttextur ist. Zweckmäßigerweise weist das Kreissegment einen Kreissegmentwinkel auf, welcher dem Winkel $\alpha$ zwischen der Ausrichtung der aufeinanderfolgenden Rechtecke entspricht. Ein aufwändiges Umrechnen zwischen zwei deutlich voneinander abweichenden geometrischen Bereichen entfällt dadurch.

Nachfolgend wird ein Ausführungsbeispiel der Erfindung näher erläutert, das in der Zeichnung dargestellt ist.

Es zeigt:

Fig. 1 eine schematische Darstellung eines zwei Stützpunkte verbindenden Rechtecks,

Fig. 2 eine schematische Darstellung von zwei Dreiecken zur Anzeige des in Fig. 1 dargestellten Rechtecks,

Fig. 3 eine schematische Darstellung von zwei aufeinanderfolgenden Rechtecken, deren Ausrichtung einen Winkel $\alpha$ relativ zueinander aufweist,

Fig. 4 eine schematische Darstellung einer qualitativen Zuordnung des Winkels $\alpha$ zu verschiedenen Quadranten,

Fig. 5 eine schematische Darstellung einer Dreiecksfolge, die einen Spalt zwischen zwei Rechtecken abdecken, deren relative Ausrichtung sich nach rechts ändert,

Fig. 6 eine schematische Darstellung gemäß Fig. 5, wobei sich die Ausrichtung der Rechtecke um fast 180° nach rechts ändert,

Fig. 7 eine schematische Darstellung gemäß den Fig. 5 und 6, wobei sich die Ausrichtung der Rechtecke nach links ändert,

Fig. 8 eine schematische Darstellung gemäß den Fig. 5 bis 7, wobei sich die Ausrichtung der Rechtecke um fast 180° nach links ändert,

Fig. 9 eine schematische Darstellung jeweils zwei aufeinanderfolgender Rechtecke, deren Ausrichtung sich lediglich geringfügig nach rechts, bzw. nach links ändert und

Fig. 10 eine schematische Darstellung eines ermittelten Bereichs eines Endpunkttexturelements, welcher einer vorangehend gezeigten Dreiecksfolge überlagert werden kann.

Es ist bekannt, dass ein Linienzug durch mehrere aufeinanderfolgende Stützpunkte v1, v2 etc. sowie durch eine vorgegebene Linienbreite w definiert werden kann. Um den Linienzug auf einem Anzeigegerät wie beispielsweise auf einem Display zur Anzeige zu bringen ist es zweckmäßig, den Linienzug durch eine Folge von die benachbarten Stützpunkte jeweils verbindenden Rechtecken anzuzeigen, wobei jedes Rechteck wiederum aus zwei Dreiecken zusammengesetzt wird. In vielen grafischen Programmiersprachen wie beispielsweise OpenGL können derartige Dreiecksfolgen besonders einfach und schnell erzeugt und zur Anzeige gebracht werden.

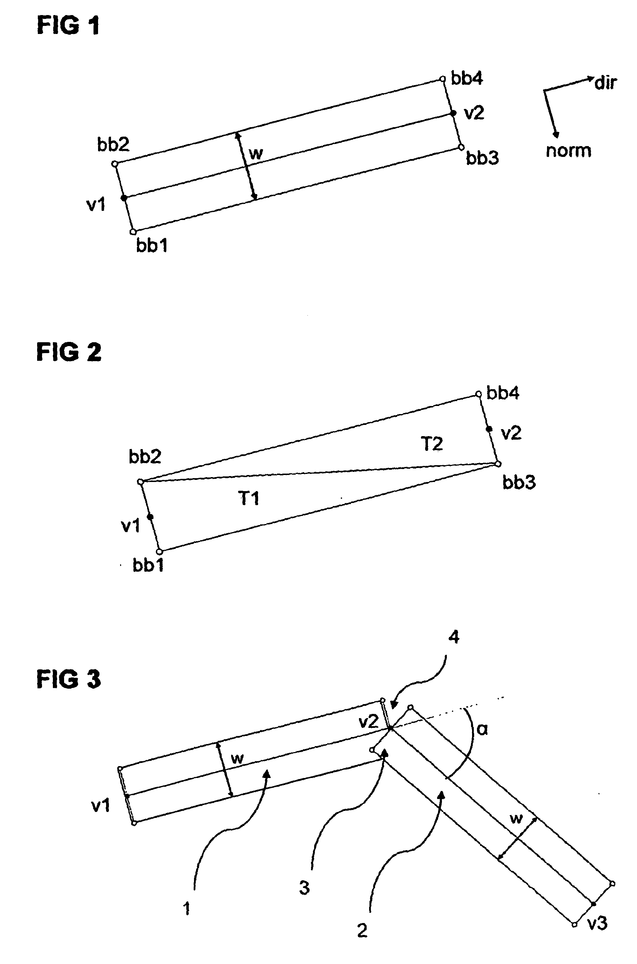

Aus den Fig. 1 und 2 ersichtlich können für zwei aufeinanderfolgende Stützpunkte v1 und v2 mit den zweidimensionalen Koordinaten v1 und v2 ein normierter Richtungsvektor "dir" mit den beiden Komponenten

$$(1) \quad dir.x = \frac{(v1.x - v2.x)}{\sqrt{(v1.x - v2.x)^2 + (v1.y - v2.y)^2}}$$

$$(2) \quad dir.y = \frac{(v1.y - v2.y)}{\sqrt{(v1.x - v2.x)^2 + (v1.y - v2.y)^2}}$$

sowie ein senkrecht zu dem Richtungsvektor gerichteter, normierter Normalenvektor "norm" mit den Komponenten

$$(3) \quad norm.x = dir.y$$

$$(4) \quad norm.y = -dir.x$$

berechnet werden. Ausgehend von den auf diese Weise berechneten Vektoren "dir" und "norm" können die zweidimensionalen Eckpunke bb1, bb2, bb3 und bb4 eines die beiden Stützpunkte v1 und v2 verbindenden Rechtecks 1 mit den nachfolgend wiedergegebenen Gleichungen berechnet werden:

$$(5) \quad bb1.x = v1.x + \left( norm.x * \frac{w}{2} \right)$$

$$(6) \quad bb1.y = v1.y + \left( norm.y * \frac{w}{2} \right)$$

$$(7) \quad bb2.x = v1.x - \left( norm.x * \frac{w}{2} \right)$$

$$(8) \quad bb2.y = v1.y - \left( norm.y * \frac{w}{2} \right)$$

$$(9) \quad bb3.x = v2.x + \left( norm.x * \frac{w}{2} \right)$$

$$(10) \quad bb3.y = v2.y + \left( norm.y * \frac{w}{2} \right)$$

$$(11) \quad bb4.x = v2.x - \left( norm.x * \frac{w}{2} \right)$$

$$(12) \quad bb4.y = v2.y - \left( norm.y * \frac{w}{2} \right)$$

Dieses Rechteck 1 kann durch zwei Dreiecke T1 und T2 ausgefüllt und angezeigt werden. In der Grafikprogrammiersprache OpenGL könnte diese Dreiecksfolge mit dem Befehl

```
glBegin(GL_TRIANGLE_STRIP);
glVertex2fv(&bb1):
glVertex2fv(&bb2);
glVertex2fv(&bb3);
glVertex2fv(&bb4);
glEnd();
```

**zur Anzeige gebracht werden.**

Werden zwei aufeinanderfolgende Rechtecke 1, 2 mit den vorangehend berechneten jeweiligen Eckpunkten zur Anzeige gebracht, so überdecken sich die beiden Rechtecke 1, 2 in einem Bereich 3 neben dem die aufeinanderfolgenden Rechtecke 1, 2 verbindenden Stützpunkt v2. In einem gegenüberliegenden Bereich 4 neben dem Stützpunkt v2 verbleibt ein nicht ausgefüllt dargestellter sichtbarer Spalt 5. Erfindungsgemäß wird dieser Spalt 5 durch eine in geeigneter Weise bestimmte Dreiecksfolge 6 abgedeckt und ausgefüllt dargestellt.

Zunächst wird eine normierte Winkelhalbierende "bisec" zwischen dem Normalenvektor "$norm_n$" des ersten Rechtecks 1 und dem Normalenvektor "$norm_{n+1}$" des nachfolgenden zweiten Rechtecks 2 mit den im Folgenden definierten Parametern, bzw. Kenngrößen berechnet:

$$(13) \qquad bisector.x = norm.x_n + norm.x_{n+1}$$

$$(14) \qquad bisector.y = norm.y_n + norm.y_{n+1}$$

$$(15) \qquad bisec.x = \frac{bisector.x}{\sqrt{bisector.x^2 + bisector.y^2}}$$

$$(16) \qquad bisec.y = \frac{bisector.y}{\sqrt{bisector.x^2 + bisector.y^2}}$$

$$(17) \qquad bisec.cos = norm.x_n * bisec.x + norm.y_n * bisec.y$$

$$(18) \qquad cosinus = norm.x_n * norm.x_{n+1} + norm.y_n * norm.y_{n+1}$$

$$(19) \qquad sinus = dir.x_n * norm.x_{n+1} + dir.y_n * norm.y_{n+1}$$

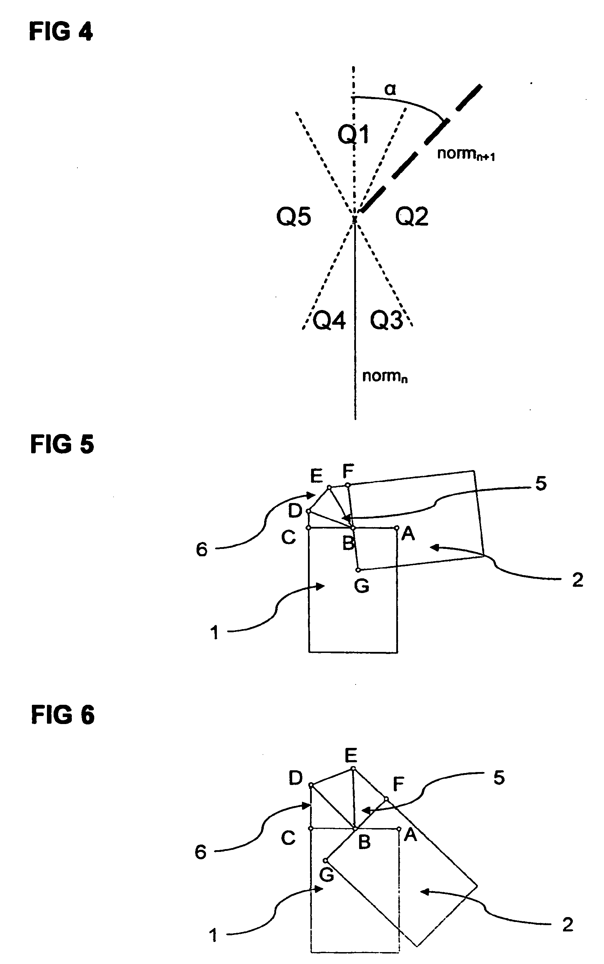

Anhand eines Winkels $\alpha$ zwischen dem normierten Richtungsvektor "$dtr_n$" des ersten Rechtecks 1 und dem normierten Richtungsvektor "$dir_{n+1}$" des zweiten Rechtecks 2 wird zur Beschleunigung der Berechnung und Darstellung des Linienzuges die weitere Vorgehensweise unterschieden. Dazu wird der Winkel $\alpha$ einem der fünf Quadranten Q1 bis Q5 gemäß Fig. 4 zugeordnet und in Abhängigkeit von dieser Zuordnung die weitere Verfahrensschrittfolge zur Auffüllung und Darstellung des Spaltes 5 zwischen den aufeinanderfolgenden Rechtecken 1 und 2 ausgewählt.

Im Falle eines nach rechts abbiegenden Verlaufs des Linienzuges (Fig. 5) mit einem Winkel $\alpha$ innerhalb des Quadranten Q2 wird der Spalt 5 mit einer Dreiecksfolge 6 bestehend aus drei Dreiecken mit den jeweiligen Eckpunkten BCD, BDE und BEF aufgefüllt. Die zweidimensionalen Koordinaten der in Fig. 5 beispielhaft abgebildeten Eckpunkte A bis G der aufeinanderfolgenden Rechtecke 1 und 2 berechnen sich gemäß

$$(20) \qquad bb.x_A = v.x_{\cdot \cdot 1} - \left( norm.x_{\cdot} * \frac{w}{2} \right)$$

$$(21) \qquad bb.y_A = v.y_{\cdot \cdot 1} - \left( norm.y_{\cdot} * \frac{w}{2} \right)$$

$$(22) \quad bb.x_B = v.x_{n+1}$$

$$(23) \quad bb.y_B = v.y_{n+1}$$

$$(24) \quad bb.x_C = v.x_{n+1} - \left( norm.x_n * \frac{w}{2} \right)$$

$$(25) \quad bb.y_C = v.y_{n+1} - \left( norm.y_n * \frac{w}{2} \right)$$

$$(26) \quad bb.x_D = v.x_{n+1} - \left( \left( norm.x_n + (1 - bisec.cos) * -dir.x_n \right) * \frac{w}{2} \right)$$

$$(27) \quad bb.y_D = v.y_{n+1} - \left( \left( norm.y_n + (1 - bisec.cos) * -dir.y_n \right) * \frac{w}{2} \right)$$

$$(28) \quad bb.x_E = v.x_{n+1} - \left( \left( norm.x_{n+1} - (1 - bisec.cos) * -dir.x_{n+1} \right) * \frac{w}{2} \right)$$

$$(29) \quad bb.y_E = v.y_{n+1} - \left( \left( norm.y_{n+1} - (1 - bisec.cos) * -dir.y_{n+1} \right) * \frac{w}{2} \right)$$

$$(30) \quad bb.x_F = v.x_{n+1} - \left( norm.x_{n+1} * \frac{w}{2} \right)$$

$$(31) \quad bb.y_F = v.y_{n+1} - \left( norm.y_{n+1} * \frac{w}{2} \right)$$

$$(32) \quad bb.x_G = v.x_{n+1} + \left( norm.x_{n+1} * \frac{w}{2} \right)$$

$$(33) \quad bb.y_G = v.y_{n+1} + \left( norm.y_{n+1} * \frac{w}{2} \right)$$

Im Falle eines stark nach rechts abbiegenden Verlaufs des Linienzuges (Fig. 6) mit einem Winkel $\alpha$ innerhalb des Quadranten Q3 wird der Spalt 5 ebenfalls mit einer Dreiecksfolge 6 bestehend aus drei Dreiecken mit den jeweiligen Eckpunkten BCD, BDE und BEF aufgefüllt, wobei die zweidimensionalen Koordinaten der relevanten Eckpunkte A bis F berechnet werden gemäß:

$$(34) \qquad bb.x_A = v.x._{..1} - \left( norm.x._{.} * \frac{w}{2} \right)$$

$$(35) \qquad bb.y_A = v.y._{..1} - \left( norm.y._{.} * \frac{w}{2} \right)$$

$$(36) \qquad bb.x_B = v.x._{..1}$$

$$(37) \qquad bb.y_B = v.y._{..1}$$

$$(38) \qquad bb.x_C = v.x._{..1} + \left( (norm.x._{.} + dir.x._{.}) * \frac{w}{2} \right)$$

$$(39) \qquad bb.y_C = v.y._{..1} + \left( (norm.y._{.} + dir.y._{.}) * \frac{w}{2} \right)$$

$$(40) \qquad bb.x_D = v.x._{..1} + \left( (norm.x._{..1} - dir.x._{..1}) * \frac{w}{2} \right)$$

$$(41) \qquad bb.y_D = v.y._{..1} + \left( (norm.y._{..1} - dir.y._{..1}) * \frac{w}{2} \right)$$

$$(42) \qquad bb.x_E = v.x._{..1} + \left( norm.x._{..1} * \frac{w}{2} \right)$$

$$(43) \qquad bb.y_E = v.y._{..1} + \left( norm.y._{..1} * \frac{w}{2} \right)$$

$$(44) \qquad bb.x_F = v.x._{..1} - \left( norm.x._{..1} * \frac{w}{2} \right)$$

$$(45) \qquad bb.y_F = v.y._{..1} - \left( norm.y._{..1} * \frac{w}{2} \right)$$

In gleicher Weise können bei einem nach links abbiegenden (Quadrant Q5), bzw. stark nach links abbiegenden (Quadrant Q4) Verlauf die Koordinaten der relevanten Eckpunkte für die Berechnung und Anzeige der den Spalt 5 auffüllenden Dreiecksfolge berechnet werden gemäß

$$(46) \quad bb.x_A = v.x_{..1} - \left( norm.x_{.} * \frac{w}{2} \right)$$

$$(47) \quad bb.y_A = v.y_{..1} - \left( norm.y_{.} * \frac{w}{2} \right)$$

$$(48) \quad bb.x_B = v.x_{..1}$$

$$(49) \quad bb.y_B = v.y_{..1}$$

$$(50) \quad bb.x_C = v.x_{..1} - \left( norm.x_{.} * \frac{w}{2} \right)$$

$$(51) \quad bb.y_C = v.y_{..1} - \left( norm.y_{.} * \frac{w}{2} \right)$$

$$(52) \quad bb.x_D = v.x_{..1} + \left( \left( norm.x_{.} + (1 - bisec.cos) * dir.x_{.} \right) * \frac{w}{2} \right)$$

$$(53) \quad bb.y_D = v.y_{..1} + \left( \left( norm.y_{.} + (1 - bisec.cos) * dir.y_{.} \right) * \frac{w}{2} \right)$$

$$(54) \quad bb.x_E = v.x_{..1} + \left( \left( norm.x_{..1} - (1 - bisec.cos) * dir.x_{..1} \right) * \frac{w}{2} \right)$$

$$(55) \quad bb.y_E = v.y_{..1} + \left( \left( norm.y_{..1} - (1 - bisec.cos) * dir.y_{..1} \right) * \frac{w}{2} \right)$$

$$(56) \quad bb.x_F = v.x_{..1} + \left( norm.x_{..1} * \frac{w}{2} \right)$$

$$(57) \quad bb.y_F = v.y_{..1} + \left( norm.y_{..1} * \frac{w}{2} \right)$$

$$(58) \quad bb.x_G = v.x_{..1} - \left( norm.x_{..1} * \frac{w}{2} \right)$$

$$(59) \quad bb.y_G = v.y_{.\,.\,1} - \left( norm.y_{.\,.\,1} * \frac{w}{2} \right),$$

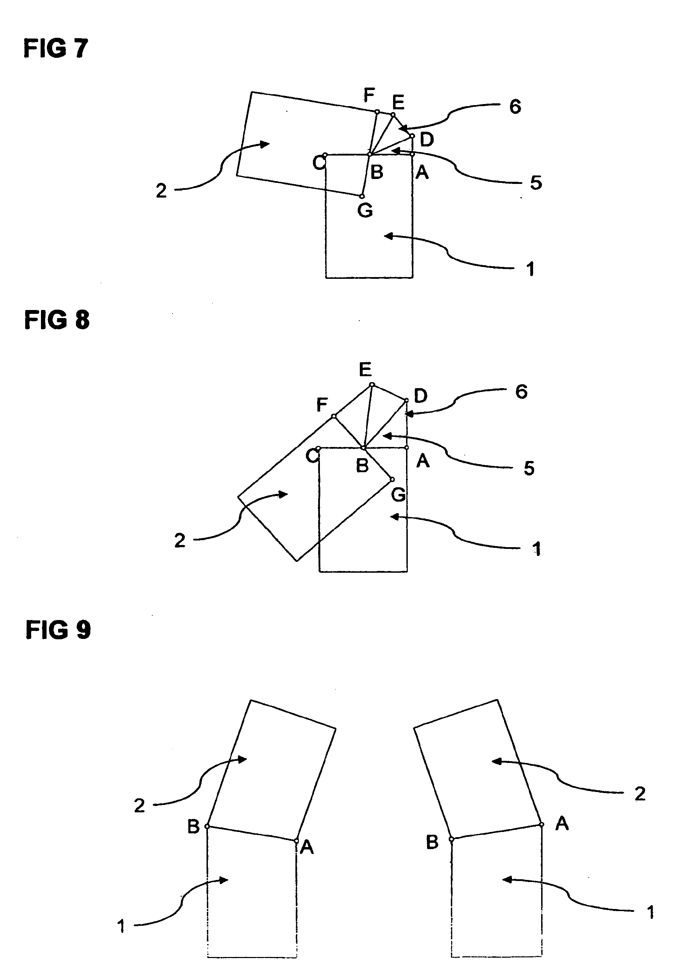

für einen Winkel $\alpha$ innerhalb des Quadranten Q5 (Fig. 7), bzw. gemäß

$$(60) \quad bb.x_A = v.x_{.\,+\,1} - \left( norm.x_{.} * \frac{w}{2} \right)$$

$$(61) \quad bb.y_A = v.y_{.\,+\,1} - \left( norm.y_{.} * \frac{w}{2} \right)$$

$$(62) \quad bb.x_B = v.x_{.\,+\,1}$$

$$(63) \quad bb.y_B = v.y_{.\,+\,1}$$

$$(64) \quad bb.x_C = v.x_{.\,+\,1} + \left( (norm.x_{.} + dir.x_{.}) * \frac{w}{2} \right)$$

$$(65) \quad bb.y_C = v.y_{.\,+\,1} + \left( (norm.y_{.} + dir.y_{.}) * \frac{w}{2} \right)$$

$$(66) \quad bb.x_D = v.x_{.\,+\,1} + \left( (norm.x_{.\,+\,1} - dir.x_{.\,+\,1}) * \frac{w}{2} \right)$$

$$(67) \quad bb.y_D = v.y_{.\,+\,1} + \left( (norm.y_{.\,+\,1} - dir.y_{.\,+\,1}) * \frac{w}{2} \right)$$

$$(68) \quad bb.x_E = v.x_{.\,+\,1} + \left( norm.x_{.\,+\,1} * \frac{w}{2} \right)$$

$$(69) \quad bb.y_E = v.y_{.\,+\,1} + \left( norm.y_{.\,+\,1} * \frac{w}{2} \right)$$

$$(70) \quad bb.x_F = v.x_{.\,+\,1} - \left( norm.x_{.\,+\,1} * \frac{w}{2} \right)$$

$$(71) \qquad bb.y_F = v.y_{\bullet \,\!\,\!} - \left( norm.y_{\bullet \,\!\,\!} * \frac{w}{2} \right)$$

für einen Winkel $\alpha$ innerhalb des Quadranten Q4 (Fig. 8).

Um eine beschleunigte Darstellung und Anzeige der ebenfalls als Dreiecksfolge angezeigten Rechtecke 1 und 2 zusammen mit der jeweils den Spalt 5 auffüllenden Dreiecksfolge 6 zu ermöglichen ist vorgesehen, dass im Anschluss an die Darstellung des ersten Rechtecks 1 durch die beiden Dreiecke T1 und T2 ein weiteres Dreieck mit den Eckpunkten ACB dargestellt, bzw angezeigt wird. Auf diese Weise wird ein Anschlussdreieck 7 erzeugt, welches von der Kantenlänge des Rechtecks 1 auf die Kantenlänge der Dreiecksfolge 6 überleitet, die lediglich halb so groß wie die Kantenlänge des Rechtecks 1 ist.

In gleicher Weise kann im Anschluss an die Darstellung der Dreiecksfolge 6 ein weiteres Anschlussdreieck 7 mit den Eckpunkten BFG dargestellt, bzw. zur Anzeige gebracht werden, mit welchem von der Kantenlänge der Dreiecksfolge 6 wieder auf die Kantenlänge des zweiten Rechtecks 2 übergeleitet wird.

Durch die Verwendung von Anschlussdreiecken 7 können die aufeinanderfolgenden Rechtecke 1, 2 und die räumlich dazwischen angeordnete Dreiecksfolge 6 als einheitliche Abfolge von Dreiecken berechnet und zur Anzeige gebracht werden. Insbesondere bei Verwendung der Grafikprogrammiersprache OpenGL kann auf diese Weise eine besonders einfache und schnelle Anzeige erzeugt werden.

Im Falle einer sich lediglich geringfügig ändernden Ausrichtung der aufeinanderfolgenden Rechtecke 1 und 2 mit einem Winkel $\alpha$ der relativen Richtungsänderung, der kleiner als ein vorgegebener Schwellenwert $\alpha_0$ von beispielsweise 20° ist, reicht es für die meisten Anwendungen aus, die einander zugewandten Eckpunkte der Rechtecke 1 und 2 anzupassen. Die beiden Rechtecke werden dabei gemäß Fig. 9 zu Polygonen mit zwei übereinstimmenden Eckpunkten A, B und einer gemeinsamen Seitenkante 8 verformt, deren Umrandung geringfügig von einer Rechteckform abweicht und einen fugenlosen Übergang der beiden aufeinanderfolgenden Rechtecke 1 und 2, bzw. der resultierenden Polygone gewährleistet. Die jeweils übereinstimmenden, bzw. gemeinsamen Eckpunkte A und B werden festgelegt zu

$$(72) \qquad bb.x_A = v.x_{\bullet \,\!\,\!} + \left( bisec.x * \frac{w}{2 * bisec.cos} \right)$$

$$(73) \qquad bb.y_A = v.y_{\bullet \,\!\,\!} + \left( bisec.y * \frac{w}{2 * bisec.cos} \right)$$

$$(74) \qquad bb.x_B = v.x_{\bullet \,\!\,\!} - \left( bisec.x * \frac{w}{2 * bisec.cos} \right)$$

$$(75) \qquad bb.y_B = v.y_{\bullet \,\!\,\!} - \left( bisec.y * \frac{w}{2 * bisec.cos} \right).$$

Auf die Berechnung und Anzeige einer den Spalt 5 auffüllenden Dreiecksfolge kann bei geringen Richtungsänderungen verzichtet werden, ohne dass dadurch die wahrnehmbare Anzeigequalität beeinträchtigt wird. Gegebenenfalls kann der Schwellenwert $\alpha_0$ in Abhängigkeit von der Linienbreite w, dem verwendeten Display oder den im Einzelfall vorgegebenen Anforderungen an die grafische Darstellungsqualität angepasst werden. In gleicher Weise kann auch die Abgrenzung der jeweiligen Quadranten Q2 und Q3, bzw. Q4 und Q5 im Einzelfall angepasst werden, um die Darstellungsqualität zu verbessern.

Die Rechtecke 1, 2, bzw. die jeweiligen Dreiecksfolgen 6 können zur Verbesserung der mit einer Textur versehen werden. Für geringfügige Richtungsänderungen (Quadrant Q1) kann vereinfachend die rechteckförmige Textur beibehalten bzw. auf die Fläche der aneinandergrenzenden Polygone ausgedehnt werden.

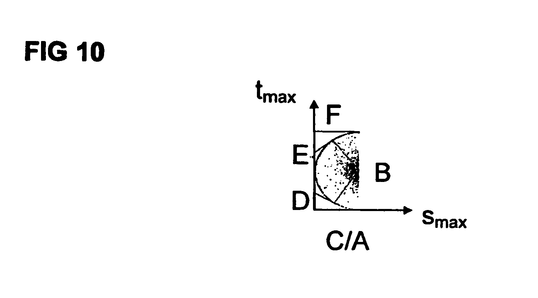

Für deutlich wahrnehmbare Richtungsänderungen (Quadranten Q2 bis Q5) kann zweckmäßigerweise auf ein radialsymmetrische Texturelement zurückgegriffen werden, die auch zur Anzeige von Endbereichen einer Linie, bzw. eines Linienzugs verwendet werden. Im Folgenden wird von einem halbkreisförmigen radialsymmetrischen Texturelement, bzw. einem Endpunkttexturelement gemäß Fig. 10 ausgegangen. Die Texturelementkoordinaten liegen in einem Bereich zwischen 0 und $S_{max}$ (hier als x-Achse dargestellt), bzw. zwischen 0 und $t_{max}$ (hier als y-Achse dargestellt). Um eine korrekte Abdeckung der Dreiecksfolge 6 durch die Textur zu ermöglichen müssen die relevanten Eckpunkte BCDEF der Dreiecksfolge 6 entsprechenden Koordinaten BCDEF des Texturelements zugeordnet werden und ein durch diese Koordinaten vorgegebener, bzw. begrenzter Texturbereich auf die Dreiecksfolge 6 abgebildet werden.

Die jeweiligen Texturkoordinaten können berechnen werden gemäß

$$(76) \quad bb.t_A = (1 - bisec.cos) * t_{max}$$

$$(77) \quad bb.s_A = (1 - (- bisec.sin)) * 0.5 * s_{max}$$

$$(78) \quad bb.t_B = t_{max}$$

$$(79) \quad bb.s_B = 0.5 * s_{max}$$

$$(80) \quad bb.t_C = (1 - bisec.cos) * t_{max}$$

$$(81) \quad bb.s_C = (1 - (- bisec.sin)) * 0.5 * s_{max}$$

$$(82) \quad bb.t_D = 0$$

$$(83) \quad bb.s_D = (1 - (- bisec.sin)) * 0.5 * s_{max}$$

$$(84) \quad bb.t_E = 0$$

$$(85) \quad bb.s_E = s_{max} - ((1 - (- bisec.sin)) * 0.5 * s_{max})$$

$$(86) \quad bb.t_F = (1 - bisec.cos) * t_{max}$$

$$(87) \quad bb.s_F = s_{max} - ((1 - (- bisec.sin)) * 0.5 * s_{max})$$

für einen Winkel $\alpha$ innerhalb des Quadranten Q2, gemäß

$$(88) \quad bb._{tA} = (1 - bisec.cos) * t_{max}$$

$$(89) \quad bb._{sA} = 0$$

$$(90) \quad bb._{tB} = t_{max}$$

$$(91) \quad bb.s_B = 0.5 * s_{MAX}$$

$$(92) \quad bb.t_C = (1 - bisec.cos) * t_{MAX}$$

$$(93) \quad bb.s_C = 0$$

$$(94) \quad bb.t_D = 0$$

$$(95) \quad bb.s_D = 0$$

$$(96) \quad bb.t_E = 0$$

$$(97) \quad bb.s_E = s_{MAX}$$

$$(98) \quad bb.t_F = t_{MAX}$$

$$(99) \quad bb.s_F = s_{MAX}$$

für einen Winkel $\alpha$ innerhalb des Quadranten Q3, gemäß

$$(100) \quad bb.t_A = (1 - bisec.cos) * t_{MAX}$$

$$(101) \quad bb.s_A = 0$$

$$(102) \quad bb.t_B = t_{MAX}$$

$$(103) \quad bb.s_B = 0.5 * s_{MAX}$$

$$(104) \quad bb.t_C = (1 - bisec.cos) * t_{MAX}$$

$$(105) \quad bb.s_C = 0$$

$$(106) \quad bb.t_D = 0$$

$$(107) \quad bb.s_D = 0$$

$$(108) \quad bb.t_E = 0$$

$$(109) \quad bb.s_E = s_{MAX}$$

$$(110) \quad bb.t_F = t_{MAX}$$

$$(111) \quad bb.s_F = s_{MAX}$$

für einen Winkel $\alpha$ innerhalb des Quadranten Q4 und gemäß

$$(112) \quad bb.t_A = (1 - bisec.cos) * t_{MAX}$$

$$(113) \quad bb.s_A = (1 - bisec.sin) * 0.5 * s_{MAX}$$

$$(114) \quad bb.t_B = t_{MAX}$$

$$(115) \quad bb.s_B = 0.5 * s_{MAX}$$

$$(116) \quad bb.t_C = (1 - bisec.cos) * t_{MAX}$$

$$(117) \quad bb.s_C = (1 - bisec.sin) * 0.5 * s_{MAX}$$

$$(118) \quad bb.t_D = 0$$

$$(119) \quad bb.s_D = (1 - bisec.sin) * 0.5 * s_{MAX}$$

$$(120) \quad bb.t_E = 0$$

$$(121) \quad bb.s_E = s_{MAX} - ((1 - bisec.sin) * 0.5 * s_{MAX})$$

$$(122) \quad bb.t_F = (1 - bisec.cos) * t_{MAX}$$

$$(123) \quad bb.s_F = s_{MAX} - ((1 - bisec.sin) * 0.5 * s_{MAX})$$

für einen Winkel $\alpha$ innerhalb des Quadranten Q5.

**Patentansprüche**

1.  Computerimplementiertes Verfahren zur Darstellung von Linienzügen auf einem rasterbasierenden Anzeigegerät, wobei ein Linienzug durch eine Folge von zweidimensionalen Stützpunkten und eine Linienbreite definiert wird, und wobei der Linienzug zwischen zwei Stützpunkten jeweils durch ein die Stützpunkte verbindendes, zur Verbindungslinie zwischen den Stützpunkten symmetrisches Rechteck mit einer durch den Abstand der Stützpunkte vorgegebenen Rechtecklänge und einer durch die Linienbreite vorgegebene Rechteckbreite dargestellt wird, und wobei ein zwischen einem ersten (1) und einem darauffolgendem zweiten Rechteck (2), ausgebildeter Spalt (5) durch eine lediglich den Spalt (5) zwischen dem ersten (1) und zweiten Rechteck (2) abdeckende Dreiecksfolge (6) mit drei Dreiecken oder mehr dargestellt wird, wenn die Ausrichtung der Rechtecke zueinander einen Winkel $\alpha$, mit $180° - \alpha_0 \geq \alpha \, \alpha_0$, $\alpha_0 = 20°$, aufweist, und wobei bei Winkeln $\alpha$ mit $\alpha < \alpha_0$, $\alpha_0 = 20°$, ein zwischen benachbarten Rechtecken verbleibender Spalt **dadurch** überdeckt wird, dass an Stelle zweier benachbarter Rechtecke jeweils Polygone gezeichnet werden, deren gemeinsame Polygonkante längs der Winkel halbierenden der den Spalt begrenzenden Rechteckskanten liegt.

2. Verfahren nach Anspruch 1, **dadurch gekennzeichnet, dass** die Dreiecksfolge (6) aus Dreiecken besteht, die jeweils den das erste (1) und das darauffolgende zweite Rechteck (2) verbindenden Stützpunkt (v2) als gemeinsamen Eckpunkt aufweisen.

3. Verfahren nach einem der vorangehenden Ansprüche, **dadurch gekennzeichnet, dass** zwischen dem ersten Rechteck (1) und der Dreiecksfolge (6) sowie zwischen der Dreiecksfolge 6 und dem anschließenden zweiten Rechteck (2) jeweils ein Anschlussdreieck (7) dargestellt wird, dessen Eckpunkte die beiden der Dreiecksfolge (6) zugewandten Eckpunkte des ersten Rechtecks (1), beziehungsweise des anschließenden zweiten Rechtecks (2) sowie der verbindende Stützpunkt (v2) sind.

4. Verfahren nach einem der vorangehenden Ansprüche, **dadurch gekennzeichnet, dass** die Eckpunkte der Dreiecksfolge (6) in Abhängigkeit von dem Winkel ($\alpha$) zwischen der Ausrichtung des ersten (1) und des darauffolgenden zweiten Rechtecks (2) vorgegeben werden.

5. Verfahren nach einem der vorangehenden Ansprüche, **dadurch gekennzeichnet, dass** die Dreiecksfolge (6) mit einer Textur gefüllt wird.

6. Verfahren nach Anspruch 5, **dadurch gekennzeichnet, dass** die Textur ein Teilbereich einer Endpunkttextur ist.

7. Verfahren nach Anspruch 6, **dadurch gekennzeichnet, dass** die Textur ein Kreissegment aus einer radialsymmetrischen Endpunkttextur ist.

8. Verfahren nach Anspruch 7, **dadurch gekennzeichnet, dass** das Kreissegment einen Kreissegmentwinkel aufweist, welcher dem Winkel $\alpha$ zwischen der Ausrichtung der aufeinanderfolgenden Rechtecke entspricht.

**Claims**

1. Computer implemented method for displaying continuous lines on a raster-based display appliance, with a continuous line being defined by a sequence of two-dimensional support points and a line width, and with the continuous line being displayed between two respective support points by means of a rectangle, which connects the support points, is symmetrical with respect to the connecting line between the support points, has a rectangle length which is predetermined by the distance between the support points, and has a rectangle width which is predetermined by the line width, and with a gap (5), which is formed between a first rectangle (1) and a subsequent second rectangle (2), being displayed by means of a triangle sequence (6), which covers only the gap (5) between the first rectangle (1) and the second rectangle (2) and has three or more triangles, while the alignment of the rectangles with respect to one another has an angle $\alpha$, where $180° - \alpha_0 \geq \alpha \geq \alpha_0$, $\alpha_0 = 20°$, and

in the case of angles $\alpha$ where $\alpha < \alpha_0$, $\alpha_0 = 20°$, with a gap which remains between adjacent rectangles being covered by in each case drawing polygons at the location of two adjacent rectangles, the common polygon edge of which polygons lies along the angle bisector of the rectangle edges which adjoin the gap.

2. Method according to Claim 1, **characterized in that** the triangle sequence (6) comprises triangles which each have the support point (v2), which connects the first (1) and the subsequent second rectangle (2), as a common corner point.

3. Method according to one of the preceding claims, **characterized in that** a connecting triangle (7) is in each case displayed between the first rectangle (1) and the triangle sequence (6) and between the triangle sequence (6) and the subsequent second rectangle (2), the corner points of which connecting triangle (7) are the two corner points, which face the triangle sequence (6), of the first rectangle (1), and of the subsequent second rectangle (2) and the connecting support point (v2).

4. Method according to one of the preceding claims, **characterized in that** the corner points of the triangle sequence (6) are predetermined as a function of the angle ($\alpha$) between the alignment of the first (1) and the subsequent second rectangle (2).

5. Method according to one of the preceding claims, **characterized in that** the triangle sequence (6) is filled with shading.

6. Method according to Claim 5, **characterized in that** the shading is a subarea of end point shading.

7. Method according to Claim 6, **characterized in that** the shading is a circular segment of radially symmetrical end point shading.

8. Method according to Claim 7, **characterized in that** the circular segment has a circular segment angle which corresponds to the angle ($\alpha$) between the alignment of the successive rectangles.

**Revendications**

1. Procédé mis en oeuvre sur ordinateur pour représenter des segments de lignes sur un dispositif d'affichage à base de trames, dans lequel un segment de ligne est défini par une suite de points bidimensionnels et par une largeur de ligne, et
dans lequel le segment de ligne est représenté entre deux points respectifs par un rectangle symétrique par rapport à la ligne reliant les points, ayant une longueur de rectangle prédéterminée par la distance entre les points et une largeur de rectangle prédéterminée par la largeur de ligne, et dans lequel un interstice (5) formé entre un premier rectangle (1) et un second rectangle (2) lui faisant suite est représenté par une suite de triangles (6) comprenant trois triangles ou plus, couvrant uniquement l'interstice (5) entre le premier rectangle (1) et le second rectangle (2), lorsque l'orientation des rectangles l'un par rapport à l'autre forme un angle $\alpha$ tel que $180° - \alpha_0 \geq \alpha \geq \alpha_0$, $\alpha_0 = 20°$, et dans lequel, pour des angles $\alpha$ tels que $\alpha < \alpha_0$, $\alpha_0 = 20°$, un interstice résiduel entre des rectangles voisins est couvert par le fait qu'au lieu de deux rectangles voisins, des polygones respectifs sont dessinés, dont le côté de polygone commun se situe le long de côtés de rectangles divisant en deux l'angle et délimitant l'interstice.

2. Procédé selon la revendication 1, **caractérisé en ce que** la suite de triangles (6) est constituée de triangles qui comprennent chacun le point de liaison (v2) entre le premier rectangle (1) et le second rectangle qui le suit (2) qui le suit en tant que sommet commun.

3. Procédé selon l'une des revendications précédentes, **caractérisé en ce qu'**entre le premier rectangle (1) et la suite de triangles (6) ainsi qu'entre la suite de triangles (6) et le second rectangle (2) qui lui est relié, est représenté un triangle de raccordement (7) respectif dont les sommets sont les deux sommets du premier rectangle (1) situés en face de la suite de triangles (6), ou du second rectangle (2) qui lui est relié ainsi que le point de liaison (v2).

4. Procédé selon l'une des revendications précédentes, **caractérisé en ce que** les sommets de la série de triangles (6) sont prédéterminés en fonction de l'angle ($\alpha$) entre l'orientation du premier rectangle (1) et du second rectangle (2) qui le suit.

5. Procédé selon l'une des revendications précédentes, **caractérisé en ce que** la série de triangles (6) est remplie d'une texture.

6. Procédé selon la revendication 5, **caractérisé en ce que** la texture est une section d'une texture de point d'extrémité.

7. Procédé selon la revendication 6, dans lequel la texture est un segment circulaire provenant d'une texture de point d'extrémité radialement symétrique.

8. Procédé selon la revendication 7, **caractérisé en ce que** le segment circulaire présente un angle de segment circulaire qui correspond à l'angle $\alpha$ entre l'orientation des rectangles successifs.

**FIG 1**

**FIG 2**

**FIG 3**

## FIG 4

## FIG 5

## FIG 6

**FIG 7**

**FIG 8**

**FIG 9**

**FIG 10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070222784 A1

- WO 8402993 A